# EUROPEAN PATENT APPLICATION

(11) **EP 2 292 961 A1**
(43) Date of publication of application: **09.03.2011**
(21) Application number: 10161625.8
(22) Date of filing: 30.04.2010
(51) Int. Cl.: F16L 9/128, F16L 23/028

(54) **Tube**

(30) Priority: 30.04.2009 PL 38790809
(71) Applicant: Spyra Primo Poland SP. Z.O.O., 43-190 Mikolow (PL)
(72) Inventor: Spyra, Czeslaw, 43-190 Mikolów (PL); Rydarowski, Henryk, 44-100 Gliwice (PL); Jasniok, Miroslaw, 41-706 Ruda Slaska (PL)
(74) Representative: Malcherek, Piotr

(57) **Abstract**

A pipe (1) made of thermoplastic with possible modifiers, having internal reinforcing elements (2) and a flanged profile (3) on either end to connect with the adjacent pipe (1), for example, by screw joints. The pipe (1) is characterized in that the flange profile (3) is formed from the end part of the pipe (1) by molding, is an integrated part of the pipe (1) and has reinforcing elements (2a) which are the extension of the reinforcing elements (2) of the pipe (1) and which are an integrated whole with those reinforcing elements (2).

Preferably the pipe (1) in the region of each flange profile (3) has a loose backing flange (4) with ports (5) for screw joints, and a stopper ring (7) is placed between the pipe (1) and the loose flange (4) made of reinforced material which embraces the outer surface of the flanged profile (3) and a part of the pipe (1).

The reinforcing elements can have the form of longitudinal or circumferential reinforcing elements or their combination.

## Description

The invention relates to a pipe, made of thermoplastic with possible modifiers for example, flame retardants and antistatic agents, especially for chemical industry, oil industry, mining industry and civil engineering to transport liquids or gases under high pressure.

There is a pipe especially for industrial use known, for example, from a description of the Polish patent application number P-381993. The pipe has a tube core made of thermoplastic containing flame retardants, antistatic agents and reinforcing elements fully integrated into this core which have a form of at least two separate units, where one of them is a radial reinforcing unit and the other one is an axially reinforcing unit. The pipe of such construction, theoretically, allows the transport of liquids or/and gases under high pressure exceeding 3,5 MPa. To make the transport under such high pressure in this pipeline possible in practice, the use of high pressure resistant joints is necessary. The commonly used joints, which have the form of flange adaptors made of plastics, mounted by clamping or welding at the ends of the pipe, are not able to withstand such pressure, which limits the technological capabilities of a pipeline made of such pipes.

The invention relates to a pipe made of thermoplastic with possible modifiers, which has internal reinforcing elements and a flanged profile on either end to connect with a neighboring pipe, for example, by screw joints.

The essence of the invention is that the pipe comprises flanged profiles, made of the end part of the pipe by plastic molding, being an integral part of the pipe, said flanged profiles having reinforcing elements which are the extension of the pipe's reinforcing elements and are an integral whole with those pipe's reinforcing elements.

In a preferable embodiment an additional flange is placed on the flange face profile, which is made of identical material as the pipe is. The additional flange, mounted on the flanged face profile, for example, by welding, is permanently connected to the flanged profile on the pipe and forms the final form of the flanged profile.

In further preferable embodiment of the pipe, a loose backing flange with ports for a screw joint is mounted close to each flanged profile and a stopper ring made of reinforced material is placed between the pipe and the loose backing flange, said stopper ring embraces the inner surface of the flanged profile and a part of the pipe.

It is also preferred when the stopper ring is made of stainless, extra fine, corrosion-resistant and high strength steel, preferably austenitic steel or made of plastic, preferably reinforced. The stopper ring can be placed on the pipe by moulding.

It is preferred when the stopper ring takes the form of a flange adaptor.

Moreover, it is preferable when the reinforcing elements of the pipe and of flanged profile take the form of at least one layer, preferably two layers containing the circumferentially reinforcing elements.

Therefore, it is advisable when all the reinforcing elements of the pipe have the shape of a screw line.

It is preferred when the reinforcing elements of the pipe and of flanged profile have the form of axial reinforcing elements.

The pipe's new construction with flanged profiles, which are the integral part of the pipe and have the reinforcing elements which are the extension of the pipe's reinforcing elements, makes the flanged profile resistant to at least the same axial and lateral loads as the remaining part of the pipe. Due to that, the pipe's joints resistance is increased at a low cost and also the transport of liquids_and/or gases under high pressure through the pipeline made of those pipes is possible, the high pressure being matched to the technical capabilities of the main sections of the pipe. Moreover, the use of the reinforced stopper rings, preferably in the form of a flanged profile with the loose backing flange for connecting the neighboring pipe, allows an uncomplicated and effective realization of the screw joint.

The invention is shown in detail in the embodiments on the enclosed drawing where fig. 1 shows the screw joint of two pipes according to the invention in a lengthwise section, fig.2 - the end part of a pipe according to the invention with a flanged profile in a lengthwise section, fig. 3 - the end part of the pipe according to the invention with a flanged profile in a lengthwise section with an additional welded flange, and fig.4 to fig. 7 - the pipe's reinforcing elements different configurations.

The pipe 1 is made of thermoplastic with additives such as fire retardants and antistatic agents in order to allow the pipe to be used, for example, in underground mine workings where the risk of an explosion occurs. _Polyethylene, polyamide or polyvinylchloride can be used as thermoplastics. Materials such as, for example, chlorinated compounds and/or azote, organophosphorus compounds and inorganic phosphorus compounds, metal oxides, metal hydroxides, metal salts, boron and zinc compounds can be used as flame retardants. Carbon black, graphite, powdered metal can be used as antistatic agent. The pipe 1 is equipped with internal reinforcing elements 2, which increase the ability of passing the axial and lateral loads by the pipe 1. The reinforcing elements 2 can be organic or inorganic fibers, metal wire or other known materials, such as glass, carbon, polymer or steel fibers, used to reinforce plastic pipes.

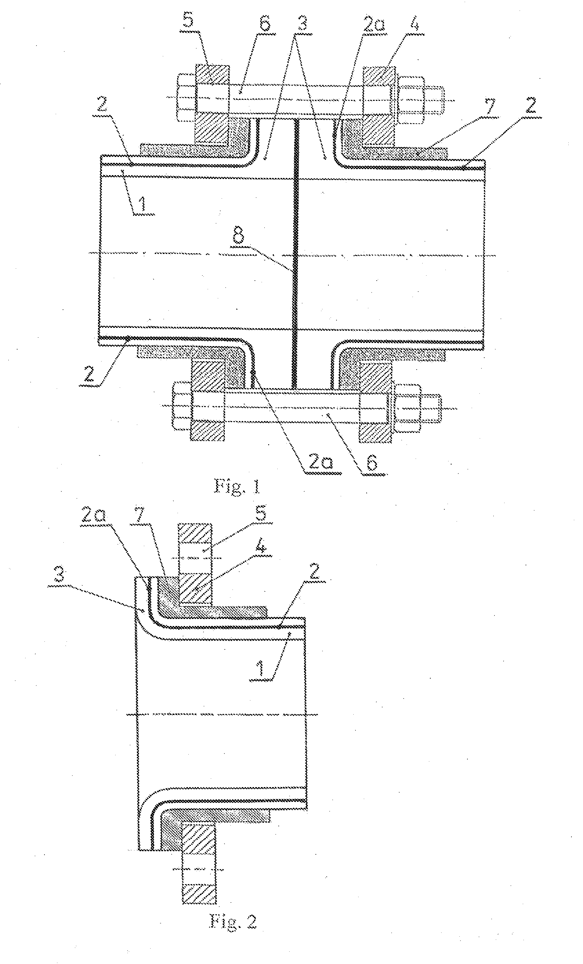

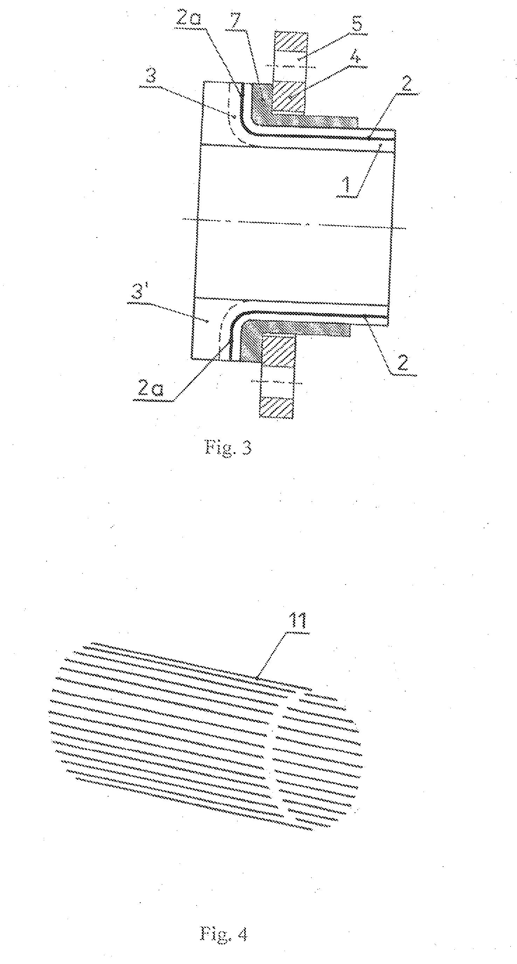

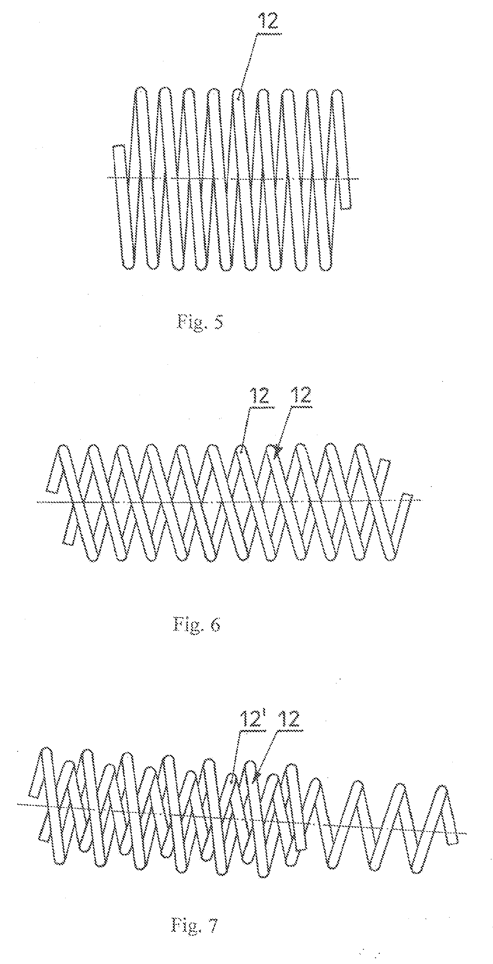

Moreover, the reinforcing elements 2, shown schematically on the attached drawing (fig. 1, fig. 2, fig.3) in the form of a line, can have different configurations. The reinforcing elements 2 can take the form of longitudinal reinforcement 11 (fig. 4) or also the form of circumferential reinforcing 12. The circumferential reinforcing layer means at least one reinforcing element with a shape similar to the outline of the screw line, which is placed and sunk inside the pipe. On fig. 5 one reinforcing element of the circumferential reinforce layer 12 is shown. In one layer there can be one or more reinforcing elements with a shape similar to the screw line depending on the pipe's diameter and cross-sectional dimensions of the reinforcing elements. If there is more than one reinforcing element in a particular layer, all reinforcing elements in this layer have a run generally corresponding to the outline of the screw line and always have the same run direction as it is shown on fig. 6. The screw line direction of reinforcing elements in case of a higher number of layers of circumferential reinforcing can be the same or can be also the opposite as it is shown on fig. 7, where selected reinforcing elements of two layers, each with a different direction of run, are shown. The other possibility is to make the reinforcing elements a combination of longitudinal and circumferential reinforcement.

Moreover, the pipe 1 is equipped with a flange profile 3 on its either end to connect with the neighboring pipe by screw joints. The flange profile 3 is made of the end part of the pipe 1 by plastic molding and it is integral part of the pipe 1, and also has reinforcing elements 2a which are the extension of the reinforcing elements 2 of the pipe 1 and which are the integral whole with those reinforcing elements 2. The reinforcing elements 2a in the flange profile 3 have the same form as the reinforcing elements 2 in the pipe 1 so that the flange profile 3 can carry at least the same loads as the pipe 1. The additional flange 3' can be affixed to the flange face profile 3, for example, by welding which after welding is permanently connected to the pipe and, therefore, may produce the final form of the flange profile 3. A loose backing flange 4 is placed in the region of each flange profile 3 on the pipe 1 with ports 5 for screws 6. The stopper ring 7 is placed between the pipe 1 and the loose backing flange 4, preferably in form of the flange adaptor, made of reinforced material. The stopper ring 7 embraces the outer surface of the flange profile 3 and the pipe 1. In the shown embodiment the stopper ring 7 is made of stainless, extra fine, corrosion-resistant and high-strength steel, for example, austenitic steel or plastic, preferably reinforced. The stopper ring 7 is clamped on the pipe 1. The tightness of the joint is also ensured by sealing 8.

### Reference numbers

1 - the pipe
2 - pipe's reinforcing elements
2a - flanged profile's reinforcing elements
3 - flanged profile
3' - additional flange
4 - loose backing flange
5 - ports in a loose backing flange 4
6 - screws
7 - stopper ring
8 - seal
11 - longitudinal reinforcement
12, 12' - circumferential reinforcement

## Claims

1. A pipe, made of thermoplastic with possible modifiers, having internal reinforcing elements and a flanged profile on either end to connect with the neighboring pipe, **characterized in that** the flanged profile (3) is made of the end part of the pipe (1) by plastic molding and is an integral part of the pipe (1) and comprises reinforcing elements (2a) which are the extension of the reinforcing elements (2) of the pipe (1) and form an integral whole with those reinforcing elements (2).

2. The pipe according to claim 1 **characterized in that** an additional ring (3') is attached to the flange face profile (3).

3. The pipe according to claim 1 or 2 **characterized in that** a loose backing ring (4) for the screw joint with ports (5) is embedded in the region of each of the flanged profiles (3) and a stopper ring (7) is placed between the pipe (1) and the loose backing flange (4), made of reinforced material, the stopper ring (7) embraces the outer surface of the flanged profile and a part of the pipe (1).

4. The pipe according to claim 3 **characterized in that** the stopper ring (7) is made of stainless, extra fine, corrosion-resistant steel and with a high-strength, preferably an austenitic steel or plastic, preferably reinforced.

5. The pipe according to claim 3 or 4 **characterized in that** the stopper ring (7) takes the form of a flange adaptor.

6. The pipe according to one of the claims 1-5 **characterized in that** the reinforcing elements (2, 2') of the pipe (1) and of the flanged profiles (3) have the form of at least one, preferably two layers of circumferentially reinforcing elements.

7. The pipe according to claim 6 **characterized in that** the reinforcing elements have the outline corresponding to the screw line.

8. The pipe according to one of the claims 1-7 **characterized in that** reinforcing elements (2, 2') of the pipe (1) and of the flange profile (3) have the form of axial reinforcing elements.
